# EUROPEAN PATENT SPECIFICATION

(11) **EP 3 921 624 B1**
(45) Date of publication and mention of the grant of the patent: **06.09.2023**
(21) Application number: 20704571.7
(22) Date of filing: 31.01.2020
(51) Int. Cl.: G01N 21/25, G01N 21/64, G01N 21/78, G01N 21/21

(54) **OPTICAL READER AND METHOD OF ANALYZING BIOLOGICAL SAMPLES**
OPTISCHES LESEGERÄT UND VERFAHREN ZUR ANALYSE BIOLOGISCHER PROBEN
LECTEUR OPTIQUE ET MÉTHODE D'ANALYSE D'ÉCHANTILLONS BIOLOGIQUES

(30) Priority: 04.02.2019 FI 20195073
(43) Date of publication of application: 15.12.2021
(73) Proprietor: Life Technologies Holdings Pte Limited, Singapore 739256 (SG)
(72) Inventor: TUUNANEN, Jukka, 00630 Helsinki (FI); FALLARERO, Adyary, 01480 Vantaa (FI); TOIVANEN, Pasi, 01690 Vantaa (FI)
(74) Representative: Berggren Oy
(86) International application number: PCT/FI2020/050055
(87) International publication number: WO 2020/161383

(56) References cited:
- US-A- 4 892 409
- US-A1- 2003 127 609
- US-A1- 2005 247 874
- US-A1- 2017 016 821

## Description

### Technical field of the invention

The present invention relates to an optical reader in accordance with claim 1.

The invention also concerns a method of analyzing biological samples as defined in claim 11.

### Background of the invention

Enzyme-Linked Immunosorbent Spot Assay (ELISPOT) is a method that is typically used for monitoring cellular immune responses in humans and other animals or organisms. The ELISPOT method allows detecting cells that secrete various substances. The ELISPOT assay can be used, for example, for detecting antigen-specific antibody secreting cells or cytokine producing cells. The examined cells are placed into the wells of a microplate or into some other suitable small vessel and treated to trigger a reaction at least in part of the cells. The cells reacting to the treatment secrete biologically relevant molecules that can be detected as spots. In this assay, one spot represents one immunologically reactive cell. These spots can be detected and counted either manually using for example a microscope or automatically using a specific reader adapted to ELISPOT assays.

ELISPOT readers have been designed so that the samples are illuminated and a camera is used for taking an image of each sample. A problem with many known devices used for ELISPOT assays is the amount of stray light produced by the light illuminating the samples. The stray light decreases the contrast of the image and makes analyzing of the samples more difficult.

US 2003/0127609 A1 describes systems, and components thereof, for analyzing samples. These systems include apparatus and methods for generating, transmitting, detecting, and/or analyzing light, including without limitation high-throughput optical screening devices for analyzing samples at one or more assay sites. These systems also include apparatus and methods for supporting samples for analysis, including without limitation multiwell sample holders such as microplates.

### Summary of the invention

An object of the present invention is to provide an improved optical reader for analyzing biological samples arranged in the wells of a microplate. The characterizing features of the optical reader according to the invention are given in the claim 1. Another object of the invention is to provide an improved method of analyzing biological samples arranged in the wells of a microplate, which is arranged in a horizontal reading plane. The characterizing features of the method are given in claim 11. Particular embodiments of the optical reader and method in accordance with the invention are defined in the appended dependent claims.

Irrespective of what is mentioned in the following description, the scope of "the invention" is solely defined by the appended independent claims.

By directing the light from the illuminating arrangement via the beam splitter and the lens system to the well of the microplate, it is possible to form a uniform and bright spot on the bottom of the well. Stray light around the well can be significantly reduced, which increases the contrast of the image. However, as the illumination beam goes through the lens system, stray light is formed on each lens surface. Stray light is also formed by scattering of the illumination beam inside the construction of the lens system and especially on metal surfaces. Both the reflections of the lens surfaces and scattering on the metallic surfaces of the lens system maintain the polarization of the light. Therefore, this stray light can be effectively removed by using polarized light for illuminating the samples and polarizing the light reflected by the sample before the light is captured by the imaging device. Unwanted stray light can thus be blocked by the polarizer. However, the light reflected from the microwell is not polarized, and can therefore partly pass through the polarizer between the beam splitter and the imaging device. As a result, images with high contrast can be obtained.

According to an embodiment of the invention, the illuminating arrangement is configured to illuminate the samples in the wells of the microplate with light having a first polarization direction, and a polarizer having a second polarization direction that is perpendicular to the first polarization direction is arranged between the beam splitter and the imaging device.

According to an embodiment of the invention, the light source is arranged to produce unpolarized light and the illuminating arrangement comprises a polarizer arranged between the light source and the beam splitter. For example a LED can thus be used as a light source.

According to an embodiment of the invention, a circular polarizer is arranged between the beam splitter and the lens system. With a circular polarizer, only one polarizer is needed.

According to an embodiment of the invention, the angle between the normal of the surface of the circular polarizer and the longitudinal axis of the lens system is in the range of 5-15 degrees. By inclining the circular polarizer, reflections from the surface of the polarizer to the imaging device are reduced and contrast of the image is further improved.

According to an embodiment of the invention, the imaging device comprises a camera sensor.

According to the invention, the illuminating arrangement comprises an integrating chamber, such as an integrating sphere. With an integrating chamber, uniform illumination with a desired beam diameter can be created.

According to an embodiment of the invention, the illuminating arrangement comprises at least one LED for producing the light used for illuminating the samples. According to an embodiment of the invention, the imaging device is arranged above the beam splitter.

According to an embodiment of the invention, the optical reader comprises a reference detector arranged to measure the intensity of light produced by the illuminating arrangement and passed through the beam splitter. With the reference detector, the effects of varying intensity of the light produced by the light source on the image can be compensated.

According to an embodiment of the invention, the optical reader comprises a first filter that is arranged between the illuminating arrangement and the beam splitter and configured to pass through light only in one or more first predetermined wavelength ranges, and a second filter that is arranged between the beam splitter and the imaging device and configured to pass through light only in one or more second predetermined wavelength ranges. The first filter can be configured to pass through certain wavelengths that are needed for excitation of samples in fluorescence measurements. The second filter can be configured to pass through only those wavelengths that are emitted by the samples. The same reader can thus be used for both ELISPOT and FluoroSpot assays.

According to the invention, the lens system comprises an aperture, through which the light from the beam splitter is directed to a well of the microplate, and the diameter of the aperture is at most the same as the diameter of the well. This prevents vignette in the samples and the imaging device.

In a method according to an embodiment of the invention, light with a first polarization direction is produced by means of the illuminating arrangement and light received from the lens system and the beam splitter is polarized by means of a polarizer having a second polarization direction that is perpendicular to the first polarization direction.

In a method according to an embodiment of the invention, polarized light is produced in the illuminating arrangement by producing unpolarized light and passing it through a polarizer.

According to an embodiment of the invention, light received from the beam splitter is polarized by means of a circular polarizer that is arranged between the beam splitter and the lens system.

According to an embodiment of the invention, unpolarized light is produced by means of at least one LED.

According to an embodiment of the invention, unpolarized light is directed towards the beam splitter from an integrating chamber, such as an integrating sphere.

According to an embodiment of the invention, the light from the illuminating arrangement is reflected to the sample by the beam splitter.

According to an embodiment of the invention, the intensity of light produced by the illuminating arrangement and passing the beam splitter is measured.

According to an embodiment of the invention, the samples are arranged in a microplate, where the walls of the wells are black. The bottoms of the wells can be white. The black walls reduce straylight and improve the contrast of the image.

### Brief description of the drawings

Embodiments of the invention are described below in more detail with reference to the accompanying drawings, in which
Fig. 1 shows schematically an optical reader according to an embodiment of the invention,
Fig. 2 shows a schematic view of an integrating sphere, and
Fig. 3 shows a schematically an optical reader according to another embodiment of the invention.

### Description of embodiments of the invention

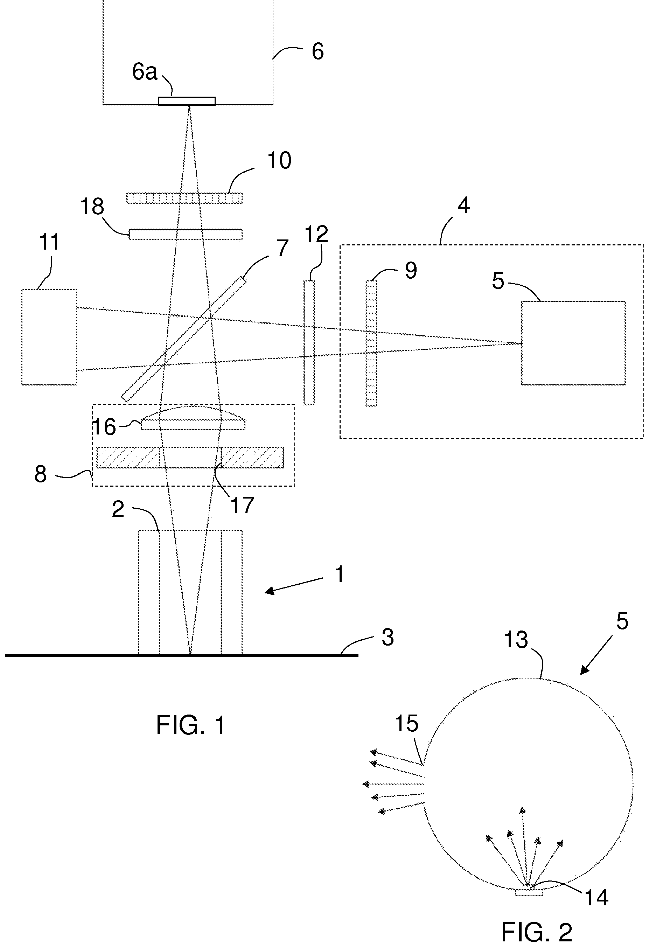

Figure 1 shows an optical reader according to an embodiment of the invention. The optical reader can be used for analyzing biological samples arranged in the wells 2 of a microplate 1. The microplate 1 is arranged in a horizontal reading plane 3 of the optical reader. The optical reader according to the invention can be used in particular for ELISPOT and FluoroSpot assays.

ELISPOT assays allow detecting cells that secrete various substances. ELISPOT assays can be used, for example, for detecting antigen-specific antibody secreting cells or cytokine producing cells. The examined cells are placed into the wells 2 of a microplate 1 and treated to cause a reaction at least in part of the cells. The cells reacting to the treatment secrete biologically relevant molecules that can be detected as spots. In this assay, one spot represents one immunologically reactive cell.

FluoroSpot assay can be considered as a modification of the ELISPOT assay. While the ELISPOT assay utilizes an enzyme-labeled antibody and a precipitating enzyme substrate for color development, the FluoroSpot method uses fluorophores. Different fluorophores can be used for detecting different analytes and cells secreting several analytes can be studied using multiplexed assays with multicolored spots.

A microplate (also called e.g. as a microtiter plate, microwell plate, multiwell plate or multiwell) is a flat plate comprising a plurality of wells, i.e. cavities that are arranged in rows and columns. In figure 1 only one of the wells 2 is shown. The wells 2 are configured to receive samples and function as small test tubes. A typical microplate comprises 6, 24, 96, 384 or 1536 wells, although also larger microplates exist. The wells are arranged in a rectangular matrix, where the ratio between the sides is typically 2:3. The samples are usually liquid, but microplates can also be used for example for samples that are in the form of powder. The microplates are typically made of a plastic material.

The optical reader comprises an illuminating arrangement 4. The function of the illuminating arrangement 4 is to produce polarized light, which is used for illuminating the samples in the wells 2 of the microplate 1. In the optical reader of figure 1, one well 2 of the microplate 1 and one sample is illuminated at a time. In the embodiment of figure 1, the illuminating arrangement 4 comprises a light source 5, which produces unpolarized light. Therefore, the illuminating arrangement 4 further comprises a first polarizer 9, which is a linear polarizer. The first polarizer 9 can be a polarizing filter. The light beam produced by the light source 5 is directed to the first polarizer 9, and substantially only light with a first polarization direction passes the first polarizer 9.

From the first polarizer 9, the light is directed to a beam splitter 7. The beam splitter 7 is an optical device, which is configured to reflect part of the light and transmit the rest of the light through it. In practice, part of the light received by the beam splitter 7 is absorbed. The beam splitter 7 is arranged to direct the reflected light towards the reading plane 3. The beam splitter 7 can be made, for instance, of two triangular glass prisms that are glued together. Alternatively, the beam splitter 7 can be a coated glass plate. Beam splitters 7 are available with different properties. The optimal beam splitting ratio for the optical reader is 50-50 %, i.e. the amount of light reflected by the beam splitter 7 equals the amount of light transmitted by the beam splitter 7. Half of the light that is not absorbed by the beam splitter 7 is thus reflected and half of the light is transmitted. However, the portion of the reflected light could be, for example, in the range of 40-60 percent.

Between the beam splitter 7 and the reading plane 3, there is arranged a lens system 8 comprising at least one lens 16. In figure 1, only a single lens 16 is shown, but in practice the lens system 8 can comprise several lenses. The lens system 8 is arranged to focus the light received from the illuminating arrangement 4 and the beam splitter 7 to the sample, which is arranged on the bottom of the well 2 of the microplate 1. The lens system 8 further comprises an aperture 17 located between the lenses 16 and the reading plane 3.

The bottom of the well 2 of the microplate 1 and the sample in the well 2 reflect part of the light back towards the lens system 8. In case of FluoroSpot assays, the samples can also emit light. The lens system 8 is configured to focus an image of the sample to an imaging device 6. The same lens system 8 is thus used for focusing the light used for illuminating the sample and for focusing the light received from the microplate 1. From the lens system 8, the light is directed to the beam splitter 7. Part of the light is reflected from the beam splitter 7 towards the illuminating arrangement 4, but part of the light can pass the beam splitter 7 and reach the imaging device 6. If the beam splitting ratio of the beam splitter 7 is 50-50 % and absorption by the beam splitter 7 is omitted, half of the light is reflected, and half of the light is transmitted through the beam splitter 7.

The imaging device 6 can comprise a digital camera sensor 6a. The imaging device 6 is configured to take one or more images of each sample.

According to the present invention, the aperture 17 between the lenses 16 of the lens system 8 and the reading plane 3 is dimensioned to have a diameter that is at most the same as the diameter of the wells 2 of the microplate 3. This eliminates vignette in both the samples and in the imaging device 6. The aperture 17 can be adjustable to allow the optical reader to be used for analyzing samples in different microplates 1. With the aperture, the size of the illuminated area at the bottom of the well can be adjusted. For instance, in a typical 96-well plate the diameter of the illuminated area could be approximately 6.6 mm and in a 384-well plate 2.5 mm.

The beam splitter 7 and the lens system 8 maintain the polarization of the light received from the illuminating arrangement 4. The sample and the bottom of the well 2 of the microplate 1 are thus illuminated with light consisting substantially of polarized light. The bottom of the well 2 of the microplate 1 is configured to depolarize the light. The bottom can for example have white matt finish. The light reflected from the bottom of the well 2 therefore consists of waves with different polarizations. The bottom can comprise for example a PVDF membrane. The walls of the well 2 can be black to reduce straylight, although that is not necessary. A suitable microplate can be manufactured for example by making a black microplate and then applying a white membrane on the bottom of each well of the microplate. Alternatively, a black plate with clear bottom could be provided with white membranes applied to the bottoms of the wells. Instead of membranes, some other kind of coating could be used in the wells.

A second polarizer 10 is arranged between the beam splitter 7 and the imaging device 6. Also the second polarizer 10 is a linear polarizer. The second polarizer 10 can be a polarizing filter. The second polarizer 10 has a second polarization direction, which is perpendicular to the first polarization direction. The second polarizer 10 thus blocks light having the first polarization direction. For instance, if the light from the illuminating arrangement 4 is s-polarized, i.e. the electric field of the light is normal to the plane of incidence, the second polarizer is p-polarizing, i.e. it transmits only light with its electric field along the plane of incidence. Reflections of light from the lens surfaces of the lens system 8 with the first polarization direction are thus blocked, whereas the light reflected from the microplate 1 and consisting of light with different polarization directions can partly pass the second polarizer 10. Stray light can thus be effectively reduced while still enabling image formation in the imaging device 6.

The polarization direction of the light received from the illuminating arrangement 4 is preferably chosen so that the reflection by the beam splitter 7 is maximized.

The light source 5 can be, for instance, a LED or a group of LEDs. The illuminated area on the bottom of the well 2 of the microplate 1 should cover the whole bottom. The diameter of a typical LED chip is much smaller than the diameter of the wells 2 of the microplate 1. The size of the illuminated area can be affected by the lens system 8. However, it may be beneficial to increase the size of the illuminated area by arranging an integrating sphere, also known as an Ulbricht sphere, around the LED or other light source. Figure 2 shows a schematic view of an embodiment, where the light source 5 comprises an integrating sphere 13. Instead of the sphere 13, an integrating chamber, as defined in claims 1 and 11, with another kind of internal shape could be used. A LED 14 is arranged to emit light inside the integrating sphere 13. The integrating sphere 13 comprises a spherical cavity. The inner surface of the cavity is covered with a diffuse reflective coating. The coating causes a uniform scattering of light. Light rays are thus by multiple scattering reflections distributed equally over the inner surface of the cavity. Instead of a coating, the whole chamber could be made of a material having suitable reflective properties. The integrating sphere 13 is provided with an opening 15, through which the light exits the cavity. The opening 15 is dimensioned to produce a light beam with a desired diameter. The power of the light is substantially maintained in the integrating sphere 13 but spatial information of the light is destroyed. Instead of the LED 14, also a laser could thus be used as a light source and the light coming out of the integrating sphere 13 would be unpolarized.

Instead of using a light source 5 producing unpolarized light and the first polarizer 9, the light source 5 could produce polarized light. The light source 5 could thus be a laser. A laser beam is typically narrow, and a beam expander could therefore be arranged after the light source to increase the diameter of the beam. The optical reader further comprises a plate moving device (not shown), which is configured to move the microplate 1. The microplate 1 is moved in the reading plane 3 so that one well 2 at a time is below the lens system 8. An image or several images of the sample is taken and the microplate 1 is then moved so that a next well 2 is below the lens system 8.

The optical reader of figure 1 further comprises a reference detector 11 arranged to measure the intensity of light produced by the illuminating arrangement 4 and transmitted through the beam splitter 7. If a LED is used as the light source 5, the intensity of the LED can change due to heating, which affects the images taken by the imaging device 6. By measuring the intensity of the light, this effect can be taken into account in interpreting the measurement results of the optical reader.

In the embodiment of figure 1, the optical reader is further provided with a first filter 12 that is arranged between the illuminating arrangement 4 and the beam splitter 7. The first filter 12 is needed only in FluoroSpot assays. The first filter 12 is not needed if the reader is used only for ELISPOT assays. The first filter 12 is configured to pass through only that part of the spectrum of the light source 5 that is needed for exciting the samples. A second filter 18 is arranged between the beam splitter 7 and the imaging device 6. Like the first filter 12, also the second filter 18 is needed only in FluoroSpot assays. The second filter 18 is configured to pass through light consisting of wavelengths emitted by the samples.

In the embodiment of figure 1, the imaging device 6 is arranged directly above the lens system 8. The illuminating arrangement 4 is arranged in the same horizontal plane with the beam splitter 7. The light from the illuminating arrangement 4 is thus reflected to the microplate 1 and the light from the microplate 1 is transmitted through the beam splitter 7. This arrangement allows the use of the reference detector 11 without disturbing the illumination of the sample. However, it would also be possible to switch the places of the imaging device 6 and the illuminating arrangement 4. The light used for illuminating the samples could thus pass the beam splitter 7 and the image of the sample could be reflected by the beam splitter 7 to the imaging device 6.

The light source 4 could comprise more than one LEDs. For instance, the light source 4 could comprise three LEDs of different colors. Three black-and-white images of each sample could be taken and the images could be used for constructing a color image.

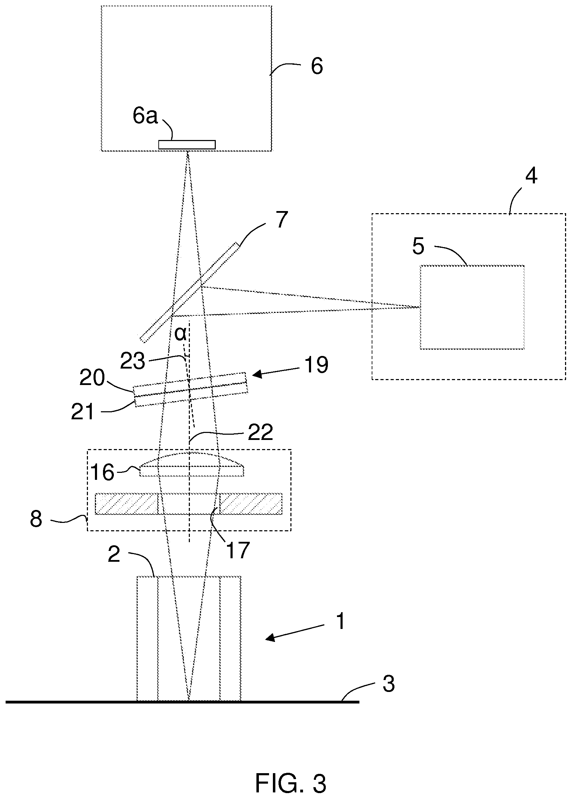

Figure 3 shows an optical reader according to another embodiment of the invention. The difference between the embodiments of figures 1 and 3 is that in the embodiment of figure 3, only one polarizer 19 is needed. The optical reader of figure 3 comprises an illuminating arrangement 4 producing unpolarized light. Light from the illuminating arrangement 4 is directed towards a beam splitter 7. Part of the light is reflected from the beam splitter 7 towards a lens system 8, which can be identical to the lens system 8 of the embodiment of figure 1. It thus comprises one or more lenses 16 and an aperture 17. A polarizer 19 is arranged between the beam splitter 7 and the lens system 8. The polarizer 19 is configured to polarize both the light transmitted from the beam splitter 7 towards the lens system 8 and the light transmitted from the lens system 8 towards the beam splitter 7 and further to an imaging device 6 comprising a camera sensor 6a.

In the embodiment of figure 3, the polarizer 19 is a circular polarizer. The circular polarizer 19 is configured to convert unpolarized light received from the beam splitter 7 into circularly polarized light. Circularly polarized light received from the lens system 8 is converted in the circular polarizer 19 into linearly polarized light.

The circular polarizer 19 comprises a linear polarizer 20 and a quarter-wave plate 21. Unpolarized light from the beam splitter 7 first reaches the linear polarizer 20. Only light with a specific polarization can pass through the linear polarizer 20. The linearly polarized light is passed through the quarter-wave plate 21, which can also be called as a quarter-wave retarder. The quarter-wave plate 21 converts the linearly polarized light into circularly polarized light. The light can be either in right circular polarization state or in left circular polarization state.

As the circularly polarized light reflects from the surfaces of the lens system 8, it remains circularly polarized. However, if the light passing through the quarter-wave plate 21 is in right circular polarization state, the polarization is transformed in reflections into left circular polarization. In the same way, left circular polarization would be transformed into right circular polarization. As the circularly polarized light passes through the quarter-wave plate 21, it is converted into linearly polarized light. However, the polarization direction is perpendicular to the polarization direction of the light that was received by the quarter-wave plate 21 from the linear polarizer 20. As a result, the linearly polarized light is blocked by the linear polarizer 20.

As an example, the linear polarizer 20 is an s-polarizing filter. It receives unpolarized light from the beam splitter 7 and passes through s-polarized light. The quarter-wave plate 21 converts the s-polarized light into right circular polarized light. The right circular polarized light reflects from the surfaces of the lens system 8 and it is converted into left circular polarized light. The left circular polarized light is converted in the quarter-wave plate 21 into p-polarized light. The p-polarized light is blocked by the s-polarizing filter 20, and reflections from the surfaces of the lens system 8 can thus not pass to the beam splitter 7 and further to the imaging device 6.

The light reflected from the bottom of the microplate 1 loses its polarization. Part of the light reflected from the microplate 2 can thus pass through the circular polarizer 19 to the beam splitter 7 and further to the imaging device 6.

For further improving the image, the circular polarizer 19 may be inclined in respect of the axial direction of the lens system 8. The axial direction of the circular polarizer 19 thus differs from the axial direction of the lens system 8. The angle α between the normal 23 of the surface of the circular polarizer 19 and the longitudinal axis 22 of the lens system 8 can be for example in the range of 5-15 degrees. By inclining the circular polarizer 19, less light is reflected from the polarizer 19 to the imaging device 6 and the contrast of the image is improved.

An example of an ELISPOT assay, for which the optical reader could be used, is described below.

The bottom of the well 2 of the microplate 1 can be made of a PVDF membrane. The membrane is coated with appropriate antibody coating (capture antibodies). T-cells are dispensed into the wells 2. When the T-cells are treated with certain antigens, the cells will secrete corresponding cytokines. These cytokines are recognized by the capture antibodies resting on the PVDF membrane. The T-cells are washed away after the secretion phase.

Biotinylated (detection) antibodies are then dispensed into the wells 2, which also recognize the cytokine via a different epitope. The microplate 1 is then incubated with alkaline phosphatase-conjugated streptavidin or a similar detection system. Streptavidin binds to the biotinylated antibodies. Unbound molecules are washed away. Enzyme substrate molecules are added to the wells 2 and these will amplify label visibility on the bottom of the well 2. Spots are formed, and as the well 2 is illuminated with the light beam, the imaging device 6 can be used for taking an image of the bottom. The spots may be counted either manually or using image recognition.

In FluoroSpot assays fluorophores are used instead of an enzyme-labeled antibody and a precipitating enzyme substrate. In that case, the illuminating arrangement 4 is used for exciting the samples on the bottom of the well 2 with light having a certain wavelength, and the sample emits light with a longer wavelength according to the optical properties of the label molecule. Different fluorophores can be used simultaneously for detecting different analytes (assay multiplexing), as the cells secreting several analytes create multicolored spots.

It will be appreciated by a person skilled in the art that the invention is not limited to the embodiments described above, but may vary within the scope of the appended claims.

## Claims

1. An optical reader for analyzing biological samples arranged in the wells (2) of a microplate (1), the optical reader comprising
- a horizontal reading plane (3) for receiving a microplate (1) comprising a plurality of wells (2),
- an illuminating arrangement (4) comprising a light source (5) and being configured to illuminate the samples in the wells (2) of the microplate (1),
- an imaging device (6) arranged to receive light from the microplate (1),
- a beam splitter (7), which is arranged to direct part of the light from the illuminating arrangement (4) towards the reading plane (3) and to direct part of the light received from the microplate (1) to the imaging device (6), and
- a lens system (8) comprising at least one lens (16) and being arranged between the beam splitter (7) and the reading plane (3) to focus the light received from the illuminating arrangement (4) to a sample and to focus an image of the sample to the imaging device (6),
wherein the optical reader is configured to transmit from the illuminating arrangement (4) to the lens system (8) only light having a specific polarization, and the optical reader comprises a polarizer (10, 19) that is arranged between the lens system (8) and the imaging device (6) and configured to block polarized light reflected from the surfaces of the lens system (8),
**characterized in that** the illuminating arrangement (4) comprises an integrating chamber (13) and the lens system (8) comprises an aperture (17), through which the light from the beam splitter (7) is directed to a well (2) of the microplate (1), and the diameter of the aperture (17) is at most the same as the diameter of the well (2).

2. An optical reader according to claim 1, wherein the illuminating arrangement (4) is configured to illuminate the samples in the wells (2) of the microplate (1) with light having a first polarization direction, and a polarizer (10) having a second polarization direction that is perpendicular to the first polarization direction is arranged between the beam splitter (7) and the imaging device (6).

3. An optical reader according to claim 2, wherein the light source (5) is arranged to produce unpolarized light and the illuminating arrangement (4) comprises a polarizer (9) arranged between the light source (5) and the beam splitter (7).

4. An optical reader according to claim 1, wherein a circular polarizer (19) is arranged between the beam splitter (7) and the lens system (8).

5. An optical reader according to claim 4, wherein the angle (α) between the normal (23) of the surface of the circular polarizer (19) and the longitudinal axis (22) of the lens system (6) is in the range of 5-15 degrees.

6. An optical reader according to any of the preceding claims, wherein the imaging device (6) comprises a camera sensor (6a).

7. An optical reader according to any of the preceding claims, wherein the illuminating arrangement (4) comprises at least one LED (14) for producing the light used for illuminating the samples.

8. An optical reader according to any of the preceding claims, wherein the imaging device (6) is arranged above the beam splitter (7).

9. An optical reader according to any of the preceding claims, wherein the optical reader comprises a reference detector (11) arranged to measure the intensity of light produced by the illuminating arrangement (4) and passed through the beam splitter (7).

10. An optical reader according to any of the preceding claims, wherein the optical reader comprises a first filter (12) that is arranged between the illuminating arrangement (4) and the beam splitter (7) and configured to pass through light only in one or more first predetermined wavelength ranges, and a second filter (18) that is arranged between the beam splitter (7) and the imaging device (6) and configured to pass through light only in one or more second predetermined wavelength ranges.

11. A method of analyzing biological samples arranged in the wells (2) of a microplate (1), which is arranged in a horizontal reading plane (3), the method comprising the steps of
- producing polarized or unpolarized light by means of an illuminating arrangement (4),
- directing part of the produced light by means of a beam splitter (7) towards a sample in a well (2) of a microplate (1),
- in case of unpolarized light, polarizing the light received from the beam splitter (7),
- directing light with a specific polarization by means of a lens system (8) to the sample,
- passing at least part of the light reflected from the microplate (1) and the sample and/or emitted by the sample through the lens system (8),
- directing part of the light received from the microplate (1) and the lens system (8) by means of the beam splitter (7) towards an imaging device (6), and
- forming an image of the sample by means of the imaging device (6),
wherein polarized light reflected from the surfaces of the lens system (8) are blocked by means of a polarizer (10, 19) arranged between the lens system (8) and the imaging device (6),
**characterized in that** the light is directed towards the beam splitter (7) from an integrating chamber (13) and the light from the beam splitter (7) is directed to a well (2) of the microplate (1) through an aperture (17) of the lens system (8), the diameter of the aperture (17) being at most the same as the diameter of the well (2).

12. A method according to claim 11, wherein the light from the illuminating arrangement (4) is reflected to the sample by the beam splitter (7).

13. A method according to claim 12, wherein the intensity of light produced by the illuminating arrangement (4) and passing the beam splitter (7) is measured.

14. A method according to any of claims 11-13, wherein the samples are arranged in a microplate (1), where the walls of the wells (2) are black.

15. A method according to any of claims 11-14, wherein the samples are arranged in a microplate (1), where the bottoms of the wells (2) are white.

## Patentansprüche

1. Optisches Lesegerät zum Analysieren von biologischen Proben, die in den Vertiefungen (2) einer Mikroplatte (1) angeordnet sind, das optische Lesegerät umfassend
- eine horizontale Leseebene (3) zum Aufnehmen einer Mikroplatte (1), umfassend eine Vielzahl von Vertiefungen (2),
- eine Beleuchtungsanordnung (4), umfassend eine Lichtquelle (5), und wobei sie konfiguriert ist, um die Proben in den Vertiefungen (2) der Mikroplatte (1) zu beleuchten,
- eine Bildgebungsvorrichtung (6), die zum Empfangen von Licht von der Mikroplatte (1) angeordnet ist,
- einen Strahlteiler (7), der angeordnet ist, um einen Teil des Lichts von der Beleuchtungsanordnung (4) auf die Leseebene (3) und einen Teil des von der Mikroplatte (1) empfangenen Lichts auf die Bildgebungsvorrichtung (6) zu lenken, und
- ein Linsensystem (8), umfassend mindestens eine Linse (16), und wobei es zwischen dem Strahlteiler (7) und der Leseebene (3) angeordnet ist, um das von der Beleuchtungsanordnung (4) empfangene Licht auf eine Probe zu richten und um ein Bild der Probe auf die Bildgebungsvorrichtung (6) zu richten,
wobei das optische Lesegerät konfiguriert ist, um von der Beleuchtungsanordnung (4) zu dem Linsensystem (8) nur Licht mit einer spezifischen Polarisation zu übertragen, und das optische Lesegerät einen Polarisator (10, 19) umfasst, der zwischen dem Linsensystem (8) und der Bildgebungsvorrichtung (6) angeordnet und konfiguriert ist, um polarisiertes Licht zu blockieren, das von den Oberflächen des Linsensystems (8) reflektiert wird,
**dadurch gekennzeichnet, dass** die Beleuchtungsanordnung (4) eine Integrierkammer (13) umfasst und das Linsensystem (8) eine Blende (17) umfasst, durch die das Licht des Strahlteilers (7) auf eine Vertiefung (2) der Mikroplatte (1) gelenkt ist, und der Durchmesser der Blende (17) höchstens gleich dem Durchmesser der Vertiefung (2) ist.

2. Optisches Lesegerät nach Anspruch 1, wobei die Beleuchtungsanordnung (4) konfiguriert ist, um die Proben in den Vertiefungen (2) der Mikroplatte (1) mit Licht mit einer ersten Polarisationsrichtung zu beleuchten, und ein Polarisator (10) mit einer zweiten Polarisationsrichtung, die senkrecht zu der ersten Polarisationsrichtung ist, zwischen dem Strahlteiler (7) und der Bildgebungsvorrichtung (6) angeordnet ist.

3. Optisches Lesegerät nach Anspruch 2, wobei die Lichtquelle (5) angeordnet ist, um unpolarisiertes Licht zu erzeugen, und die Beleuchtungsanordnung (4) einen Polarisator (9) umfasst, der zwischen der Lichtquelle (5) und dem Strahlteiler (7) angeordnet ist.

4. Optisches Lesegerät nach Anspruch 1, wobei ein zirkularer Polarisator (19) zwischen dem Strahlteiler (7) und dem Linsensystem (8) angeordnet ist.

5. Optisches Lesegerät nach Anspruch 4, wobei der Winkel (α) zwischen der Normalen (23) der Oberfläche des zirkularen Polarisators (19) und der Längsachse (22) des Linsensystems (6) im Bereich von 5 bis 15 Grad liegt.

6. Optisches Lesegerät nach einem der vorstehenden Ansprüche, wobei die Bildgebungsvorrichtung (6) einen Kamerasensor (6a) umfasst.

7. Optisches Lesegerät nach einem der vorstehenden Ansprüche, wobei die Beleuchtungsanordnung (4) mindestens eine LED (14) zum Erzeugen des zum Beleuchten der Proben verwendeten Lichts umfasst.

8. Optisches Lesegerät nach einem der vorstehenden Ansprüche, wobei die Bildgebungsvorrichtung (6) oberhalb des Strahlteilers (7) angeordnet ist.

9. Optisches Lesegerät nach einem der vorstehenden Ansprüche, wobei das optische Lesegerät einen Referenzdetektor (11) umfasst, der angeordnet ist, um die Lichtstärke zu messen, die von der Beleuchtungsanordnung (4) erzeugt und durch den Strahlteiler (7) geleitet wird.

10. Optisches Lesegerät nach einem der vorstehenden Ansprüche, wobei das optische Lesegerät einen ersten Filter (12), der zwischen der Beleuchtungsanordnung (4) und dem Strahlteiler (7) angeordnet und konfiguriert ist, um Licht nur in einem oder mehreren ersten vorgegebenen Wellenlängenbereichen durchzuleiten, und einen zweiten Filter (18), der zwischen dem Strahlteiler (7) und der Bildgebungsvorrichtung (6) angeordnet und konfiguriert ist, um Licht nur in einem oder mehreren zweiten vorgegebenen Wellenlängenbereichen durchzuleiten, umfasst.

11. Verfahren zum Analysieren von biologischen Proben, die in den Vertiefungen (2) einer Mikroplatte (1) angeordnet sind, die in einer horizontalen Leseebene (3) angeordnet ist, das Verfahren umfassend die Schritte
- Erzeugen von polarisiertem oder unpolarisiertem Licht mittels einer Beleuchtungsanordnung (4),
- Lenken eines Teils des erzeugten Lichts mittels eines Strahlteilers (7) auf eine Probe in einer Vertiefung (2) einer Mikroplatte (1),
- im Falle von unpolarisiertem Licht, Polarisieren des von dem Strahlteiler (7) empfangenen Lichts,
- Lenken von Licht mit einer spezifischen Polarisation mittels eines Linsensystems (8) auf die Probe,
- Durchleiten mindestens eines Teils des Lichts, das von der Mikroplatte (1) und der Probe reflektiert und/oder von der Probe emittiert wird, durch das Linsensystem (8),
- Lenken eines Teils des Lichts, das von der Mikroplatte (1) und dem Linsensystem (8) mittels des Strahlteilers (7) empfangen wird, auf eine Bildgebungsvorrichtung (6), und
- Bilden eines Bildes der Probe mittels der Bildgebungsvorrichtung (6), wobei polarisiertes Licht, das von den Oberflächen des Linsensystems (8) reflektiert wird, mittels eines Polarisators (10, 19) blockiert wird, der zwischen dem Linsensystem (8) und der Bildgebungsvorrichtung (6) angeordnet ist,
**dadurch gekennzeichnet, dass** das Licht von einer Integrierkammer (13) auf den Strahlteiler (7) gelenkt ist und das Licht von dem Strahlteiler (7) durch eine Blende (17) des Linsensystems (8) auf eine Vertiefung (2) der Mikroplatte (1) gelenkt ist, wobei der Durchmesser der Blende (17) höchstens gleich dem Durchmesser der Vertiefung (2) ist.

12. Verfahren nach Anspruch 11, wobei das Licht von der Beleuchtungsanordnung (4) durch den Strahlteiler (7) auf die Probe reflektiert wird.

13. Verfahren nach Anspruch 12, wobei die Lichtstärke, die durch die Beleuchtungsanordnung (4) erzeugt wird und den Strahlteiler (7) passiert, gemessen wird.

14. Verfahren nach einem der Ansprüche 11 bis 13, wobei die Proben in einer Mikroplatte (1) angeordnet sind, wo die Wände der Vertiefungen (2) schwarz sind.

15. Verfahren nach einem der Ansprüche 11 bis 14, wobei die Proben in einer Mikroplatte (1) angeordnet sind, wo die Unterseiten der Vertiefungen (2) weiß sind.

## Revendications

1. Lecteur optique permettant d'analyser des échantillons biologiques agencés dans les puits (2) d'une microplaque (1), le lecteur optique comprenant
- un plan de lecture horizontal (3) permettant de recevoir une microplaque (1) comprenant une pluralité de puits (2),
- un agencement d'illumination (4) comprenant une source de lumière (5) et étant configuré pour illuminer les échantillons dans les puits (2) de la microplaque (1),
- un dispositif d'imagerie (6) agencé pour recevoir de la lumière provenant de la microplaque (1),
- un diviseur de faisceau (7), qui est agencé pour diriger une partie de la lumière provenant de l'agencement d'illumination (4) en direction du plan de lecture (3) et pour diriger une partie de la lumière reçue de la microplaque (1) vers le dispositif d'imagerie (6), et
- un système de lentille (8) comprenant au moins une lentille (16) et étant agencé entre le diviseur de faisceau (7) et le plan de lecture (3) pour focaliser la lumière reçue de l'agencement d'illumination (4) vers un échantillon et pour focaliser une image de l'échantillon vers le dispositif d'imagerie (6),
le lecteur optique étant configuré pour transmettre à partir de l'agencement d'illumination (4) vers le système de lentille (8) uniquement de la lumière ayant une polarisation spécifique, et le lecteur optique comprenant un polariseur (10, 19) qui est agencé entre le système de lentille (8) et le dispositif d'imagerie (6) et configuré pour bloquer de la lumière polarisée réfléchie par les surfaces du système de lentille (8),
**caractérisé en ce que** l'agencement d'illumination (4) comprend une chambre d'intégration (13) et le système de lentille (8) comprend une ouverture (17), à travers laquelle la lumière provenant du diviseur de faisceau (7) est dirigée vers un puits (2) de la microplaque (1), et le diamètre de l'ouverture (17) est au plus le même que le diamètre du puits (2).

2. Lecteur optique selon la revendication 1, dans lequel l'agencement d'illumination (4) est configuré pour illuminer les échantillons dans les puits (2) de la microplaque (1) avec de la lumière ayant une première direction de polarisation, et un polariseur (10) ayant une seconde direction de polarisation qui est perpendiculaire à la première direction de polarisation est agencé entre le diviseur de faisceau (7) et le dispositif d'imagerie (6).

3. Lecteur optique selon la revendication 2, dans lequel la source de lumière (5) est agencée pour produire de la lumière non polarisée et l'agencement d'illumination (4) comprend un polariseur (9) agencé entre la source de lumière (5) et le diviseur de faisceau (7).

4. Lecteur optique selon la revendication 1, dans lequel un polariseur circulaire (19) est agencé entre le diviseur de faisceau (7) et le système de lentille (8).

5. Lecteur optique selon la revendication 4, dans lequel l'angle (α) entre la normale (23) de la surface du polariseur circulaire (19) et l'axe longitudinal (22) du système de lentille (6) est dans la plage de 5 à 15 degrés.

6. Lecteur optique selon l'une quelconque des revendications précédentes, dans lequel le dispositif d'imagerie (6) comprend un capteur de caméra (6a).

7. Lecteur optique selon l'une quelconque des revendications précédentes, dans lequel l'agencement d'illumination (4) comprend au moins une DEL (14) permettant de produire la lumière utilisée pour illuminer les échantillons.

8. Lecteur optique selon l'une quelconque des revendications précédentes, dans lequel le dispositif d'imagerie (6) est agencé au-dessus du diviseur de faisceau (7).

9. Lecteur optique selon l'une quelconque des revendications précédentes, le lecteur optique comprenant un détecteur de référence (11) agencé pour mesurer l'intensité de la lumière produite par l'agencement d'illumination (4) et ayant traversé le diviseur de faisceau (7).

10. Lecteur optique selon l'une quelconque des revendications précédentes, le lecteur optique comprenant un premier filtre (12) qui est agencé entre l'agencement d'illumination (4) et le diviseur de faisceau (7) et configuré pour laisser passer de la lumière uniquement dans une ou plusieurs premières plages de longueur d'onde prédéterminées, et un second filtre (18) qui est agencé entre le diviseur de faisceau (7) et le dispositif d'imagerie (6) et configuré pour laisser passer de la lumière uniquement dans une ou plusieurs secondes plages de longueur d'onde prédéterminées.

11. Procédé d'analyse d'échantillons biologiques agencés dans les puits (2) d'une microplaque (1), qui est agencée dans un plan de lecture horizontal (3), le procédé comprenant les étapes consistant à
- produire de la lumière polarisée ou non polarisée au moyen d'un agencement d'illumination (4),
- diriger une partie de la lumière produite au moyen d'un diviseur de faisceau (7) en direction d'un échantillon dans un puits (2) d'une microplaque (1),
- en cas de lumière non polarisée, polariser la lumière reçue du diviseur de faisceau (7),
- diriger de la lumière avec une polarisation spécifique au moyen d'un système de lentille (8) vers l'échantillon,
- faire passer au moins une partie de la lumière réfléchie par la microplaque (1) et l'échantillon et/ou émise par l'échantillon à travers le système de lentille (8),
- diriger une partie de la lumière reçue de la microplaque (1) et du système de lentille (8) au moyen du diviseur de faisceau (7) en direction d'un dispositif d'imagerie (6), et
- former une image de l'échantillon au moyen du dispositif d'imagerie (6), la lumière polarisée réfléchie par les surfaces du système de lentille (8) étant bloquée au moyen d'un polariseur (10, 19) agencé entre le système de lentille (8) et le dispositif d'imagerie (6),
**caractérisé en ce que** la lumière est dirigée en direction du diviseur de faisceau (7) à partir d'une chambre d'intégration (13) et la lumière provenant du diviseur de faisceau (7) est dirigée vers un puits (2) de la microplaque (1) par l'intermédiaire d'une ouverture (17) du système de lentille (8), le diamètre de l'ouverture (17) étant au plus le même que le diamètre du puits (2).

12. Procédé selon la revendication 11, dans lequel la lumière provenant de l'agencement d'illumination (4) est réfléchie vers l'échantillon par le diviseur de faisceau (7).

13. Procédé selon la revendication 12, dans lequel l'intensité de la lumière produite par l'agencement d'illumination (4) et passant par le diviseur de faisceau (7) est mesurée.

14. Procédé selon l'une quelconque des revendications 11 à 13, dans lequel les échantillons sont agencés dans une microplaque (1), où les parois des puits (2) sont noires.

15. Procédé selon l'une quelconque des revendications 11 à 14, dans lequel les échantillons sont agencés dans une microplaque (1), où les fonds des puits (2) sont blancs.
